Europäisches Patentamt

European Patent Office

Office européen des brevets

(11) Publication number: 0 562 816 A2

# EUROPEAN PATENT APPLICATION

(21) Application number: 93302189.1

(22) Date of filing: 23.03.93

(51) Int. Cl.5: F23C 5/00, F23C 6/04

(30) Priority: 26.03.92 US 857893

(43) Date of publication of application:
29.09.93 Bulletin 93/39

(84) Designated Contracting States:
BE DE ES FR GB IT NL

(71) Applicant: THE BOC GROUP, INC.
575 Mountain Avenue
Murray Hill New Jersey 07974(US)

(72) Inventor: Wade, Douglas Romich, Jr.

Deceased(US)

(74) Representative: Wickham, Michael et al
c/o Patent and Trademark Department The
BOC Group plc Chertsey Road
Windlesham Surrey GU20 6HJ (GB)

(54) Method for combustion of a fuel.

(57) A method of burning a fuel in which combustion of the fuel is carried out in a first fuel-oxidant mixture having an oxidant-fuel ratio ($R_L$) and in a second fuel-oxidant mixture having an oxidant-fuel ratio ($R_H$) so as to satisfy the formula

$$R_L < R_G < R_H$$

wherein $R_G$ is the overall oxidant-fuel ratio used in the combustion reaction.

A first burner 10 may create the first mixture and a second burner 12 the second mixture. One burner is operated fuel rich and the other oxidant rich. Excess fuel and oxygen enter a second combustion zone 16 in which the fuel is burned. More efficient heating of a vessel 2 is thereby made possible.

FIG. I

The present invention generally relates to a method for the combustion of at least two fuel-oxidant mixtures to obtain greater control of the overall thermal energy. At least two fuel-oxidant mixtures are used having different oxidant-fuel ratios. The flame temperature from one of the mixtures is typically below that obtained from the expected flame temperature if the system were operated at the overall oxidant-fuel ratio.

Industrial furnaces such as the type used in the making and processing of steel, glass and aluminium must generate high temperature flames to carry out the heat transfer process. If the flame temperature is too high localised hot spots will develop around the flame which can damage the furnace refractory and adversely affect the process.

Despite problems with localised hot spots much effort has been devoted to firing industrial furnaces with higher concentrations of oxidants such as oxygen enriched air or substantially pure oxygen. A concentrated oxidant stream improves the efficiency of the furnace by increasing the maximum firing rate of the burners for a given furnace, decreasing fuel consumption and decreasing the amount of pollution by minimising the volume of the flue gas.

There have been developed a number of approaches for eliminating localised hot spots while still taking advantage of the benefits of concentrated oxidant streams.

For example, US-A-3,620,514 discloses a furnace with a pair of primary horizontally spaced fuel-air burners with a supplemental oxygen-fuel burner of lower heating capacity. The axis of the supplemental burner extends to the converging point of the primary burner axes to provide a high heat transfer rate with greater control of the furnace atmosphere.

US-A-4,378,205 discloses a process in which at least one jet of an oxidant gas is injected into the furnace at a velocity which is sufficient to achieve gas recirculation and mixing, where the velocity of the gas is proportional to the flow rate of the oxidant gas. The products of combustion identified as furnace gases are aspirated into the oxidant jet to achieve a lower than normal flame temperature during subsequent combustion.

US-A-4,408,982 discloses a system using alternating high and low firing rates. During the low firing period there is substantial leakage of air into the furnace to suppress the flame temperature while air leakage is substantially prevented during the high firing period. The injection is delayed for a specific time which is dependent on the volume of the furnace divided by the product of the high firing rate and the temperature.

US-A-4,473,350 discloses an oxy-fuel burner in which an oxygen stream is directed into a central portion of a combustion chamber. A major portion of the fuel is directed into the base of the combustion chamber and about the oxygen so that oxygen is generally present in the centre of the flame. In a further approach, a fuel stream is contacted and mixed with two different oxygen and/or air based oxidising gases as described in US-A-4,642,047.

Despite these efforts, there is still a need for a more efficient system to control the atmosphere within a furnace and for firing a furnace without the presence of localised hot spots. In addition, it would be desirable to be able to control the location of combustion within the furnace. A further advantage would be obtained if relatively isolated portions of a furnace or vessel could be heated without major changes to the structure.

According to the present invention there is provided a method of burning a fuel comprising: burning fuel in at least one first fuel-oxidant mixture from a first burner having an oxidant-fuel ratio ($R_L$) and in at least one second fuel-oxidant mixture from a second burner having an oxidant-fuel ratio ($R_H$) such that

$$R_L < R_G < R_H$$

wherein $R_G$ is the overall oxidant-fuel ratio used in the combustion.

The method of the invention is based on providing the respective mixtures with selected oxidant-fuel ratios relative to the total or gross oxidant-fuel ratio used in the vessel. Specifically, at least one of the fuel-oxidant mixtures from a first burner must have an oxidant-fuel ratio less than the gross oxidant-fuel ratio while at least one of the other mixtures from a second burner must have an oxidant-fuel ratio exceeding the gross oxidant-fuel ratio. In addition, the flame from at least one of the mixtures may have a flame temperature which is less than the flame temperature expected from a burner operating at the gross oxidant-fuel ratio.

Method according to the invention will now be described by way of example with reference to the accompanying drawings, in which:

Figure 1 is a graph showing the flame temperature as a function of the oxidant-fuel ratio;

Figure 2A is a front view of a ladle and an embodiment of the invention in which a secondary combustion zone is located in the lower left portion of the ladle;

Figure 2B is a front view of the ladle shown in Figure 2A with the secondary combustion zone moved to the lower right portion of the ladle;

Figure 3 is a graph showing the flame temperature as a function of the oxidant-to-fuel ratio for the heating of a steel ladle as shown in Figures 2A and 2B;

Figure 4 is a side view of a well furnace employing an embodiment of the present invention;

Figure 5 is a plan view of the embodiment of the invention shown in Figure 4; and

Figure 6 is a graph showing the flame temperature as a function of the oxidant-fuel ratio for a well furnace as shown in Figures 4 and 5.

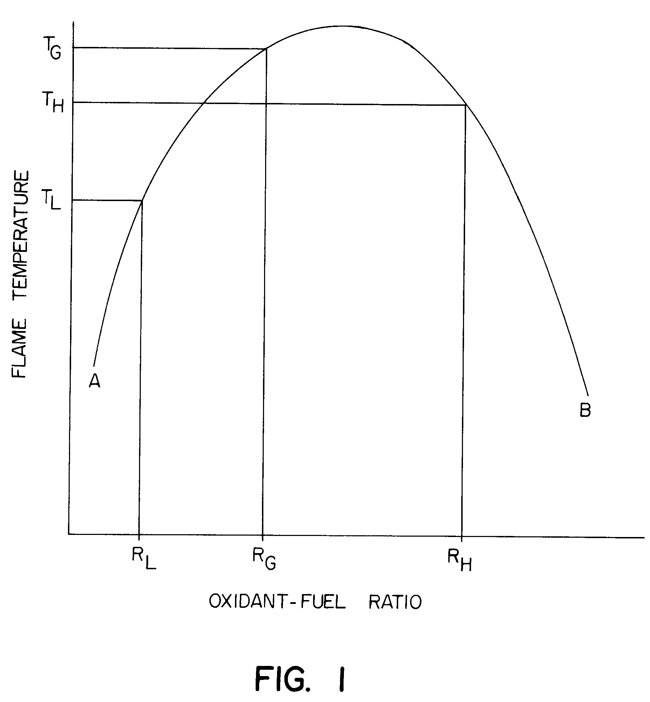

The method of the present invention is dependent on the relationship between flame temperature and the oxidant-fuel ratio used to carry out the process. Referring to Figure 1, the gross oxidant-fuel ratio ($R_G$) is obtained from the total available oxidant ($O_G$) divided by the total available fuel ($F_G$) for the given process unit as shown in Equation 1

$$R_G = O_G/F_G \qquad 1$$

The oxidant-fuel ratio of any individual burner is represented by the formula

$$R_N = O_N/F_N \qquad 2$$

where $O_N$ is the oxidant consumed by the nth burner and $F_N$ is the fuel consumed by the nth burner.

The sources of the oxidant include the combustion system itself, process derived chemicals and air which typically leaks or is intentionally added into the reaction vessel. Sources of fuel include the combustion system and process derived chemicals.

The fuel and/or oxidant is supplied to the system through at least two burners. As used herein, the term "burner" includes any device which brings fuel, oxidant or mixture thereof to the reaction vessel to create a flame. Examples of burners in accordance with the present invention include traditional burners which produce a flame from a fuel-oxidant mixture, oxygen lances and the like. It will be understood, however, that the present invention requires at least two burners which each emit a fuel-oxidant mixture as described in detail hereafter.

The fuels which may be used in the present invention are selected from any solid, liquid or gaseous fuel or mixtures thereof. The preferred fuels are straight-or branched-chain hydrocarbons having up to 20 carbons, most preferably methane. The oxidants are also solid, liquid or gaseous substances or mixtures thereof. The preferred oxidants are those customarily employed in industrial furnaces and include oxygen enriched air and substantially pure oxygen.

The amount of oxidant and fuel for each burner used in the system is dependent on the desired energy and weight balance. The energy balance is represented by the equation.

$$E_G = f(R_G) \, F_G \qquad 3$$

wherein $E_G$ is the total energy of the system required per unit of time, $R_G$ is the gross oxidant-fuel ratio and $F_G$ is the total fuel input including any secondary fuel values obtained from any process derived fuels not introduced into the vessel through the burners. Examples include metals that are oxidised (exothermic reactions) or combustible off-gases produced by oxide reduction reactions, e.g. carbon monoxide.

The weight balance for the fuel or total fuel consumed is represented by the equation

$$F_G = F_1 + F_2......F_N + F_X \qquad 4$$

where $F_G$ is the sum of the fuel consumed by the individual burners $F_1$ through $F_N$ and $F_X$ is the amount of any fuel consumed which is obtained from process derived materials.

The oxidant weight balance or total oxidant consumed is represented by the following equation

$$O_G = R_G F_G \qquad 5$$

wherein

$$R_G F_G = R_1 F_1 + R_2 F_2 + .......R_N F_N + R_X F_X \qquad 6$$

Thus, the total oxidant consume ($O_G$) is the product of the gross oxidant-fuel ratio and the total fuel available to the system. This is calculated from the sum of the products of the appropriate oxidant-fuel ratio and the fuel consumed for each of the burners of the system and any consumed fuel which is obtained from process based reactions.

In accordance with the present invention, greater control and location of combustion in the system may be obtained when certain requirements are met. At least one of the burners must have an oxidant-fuel mixture having an oxidant-fuel ratio ($R_L$) less than the gross oxidant-fuel ratio ($R_G$) and at least one burner must have an oxidant-fuel mixture having an oxidant-fuel ratio ($R_H$) greater than $R_G$

$$R_L < R_G < R_H \qquad 7$$

In addition, at least one burner preferably produces a flame temperature less than the flame temperature resulting from a flame produced by a theoretical burner operating at an oxidant-fuel ratio equal to $R_G$.

Referring to Figure 1, for a given $R_G$ a system having at least two burners will have at least one burner with an oxidant-fuel ratio ($R_L$) less than $R_G$ and another with an oxidant-fuel ratio ($R_H$) greater than $R_G$.

Each burner for a given oxidant-fuel ratio produces a flame of a given temperature. In the graph shown in Figure 1, the flame temperature $(T_G)$ produced by $R_G$ exceeds the flame temperature of both burners having oxidant-fuel ratios of $R_L$ and $R_H$. As shown in Figure 1, the curve AB represents an idealised relationship of flame temperature and oxidant-fuel ratio. It should be understood, however, that this relationship may deviate from that shown in Figure 1.

The selection of a suitable $R_G$ for a given heat transfer application depends on such factors as the type of fuel, the desired process products, heating cycle time, and thermal profile. Once the $R_G$ is chosen, then a particular combination of oxidant-fuel streams is selected to meet the desired objectives. At least two of the burners must have individual oxidant-fuel ratios such that one ratio is above and one is below the $R_G$ value and at least one burner preferably produces a flame temperature less than the flame temperature $(T_G)$ theoretically produced by a burner operating at $R_G$.

By operating under the process conditions of the present invention, it is possible to obtain desirable thermal profiles though the process may require fuel inefficient oxidant-fuel ratios. Appropriate fuel/oxidant streams may be positioned to form localised combustion regions in which control of the localised atmosphere can be maintained. For example, respective fuel-oxidant mixtures may be burned in a first combustion zone associated with each burner at less than the theoretical maximum flame temperature. There is produced in the first combustion zone a first combustion product stream which may have excess fuel and a second combustion product which may have excess oxidant. Under these circumstances, the first and second product streams may then be burned in at least one second combustion zone, remote from the first combustion zone, to produce a flame having a temperature which is less than the maximum temperature.

Again referring to Figure 1, a dual combustion zone system is created when flames having respective oxidant-fuel ratios of $R_L$ and $R_H$ are contacted. The excess fuel from the $R_L$ burner and excess oxidant from the $R_H$ burner react in a secondary combustion zone. Varying the values of the oxidant-fuel ratios of the respective burners will result in changes to the thermal and chemical profile in the first and second combustion zones thereby providing the ability to control the atmosphere in each combustion zone. It should also be noted that the $R_G$ ratio can be adjusted to improve the overall fuel efficiency of the system as compared to a traditional bulk combustion control operation.

As previously indicated, the flame temperature of at least one burner is preferably less than the gross flame temperature $(T_G)$ and at least one $R_N$ value $(R_L)$ must be less than $R_G$ and at least one $R_N$ value $(R_H)$ must be greater than $R_G$. There is another set of practical limitations to the present process which arise when extreme $R_N$ values are contemplated. For example, the $R_N$ value for a particular burner should not exceed the flammability limits of the fuel-oxidant mixture. In addition, the $R_N$ value should not exceed the ability of the combustion equipment to support stable flame conditions. A further limitation on the $R_N$ value is that the oxidant-fuel ratios should not be counter-productive to the reaction process.

In carrying out the process of the present invention, it is first necessary to determine the gross oxidant-fuel ratio $(R_G)$ for the system desired. If it is desirable to operate the system at peak efficiency to minimise residual fuel or oxidant, then a $R_G$ value approximating the stoichiometric requirement may be selected which is dependent on the type of fuel and oxidant used in the process.

Once the $R_G$ value is chosen, it is necessary to estimate the energy requirements of the system using the following equation

$$E_G = f(R_G) F_G \qquad 3$$

The number of burners in the system and their respective oxidant-fuel ratios and flow rates are determined taking into account all oxidant and fuel sources using the fuel and oxidant weight balance equations. The $R_N$ for each burner is set such that $R_L < R_G < R_H$. The temperature of at least one flame may be selected to be less than $T_G$.

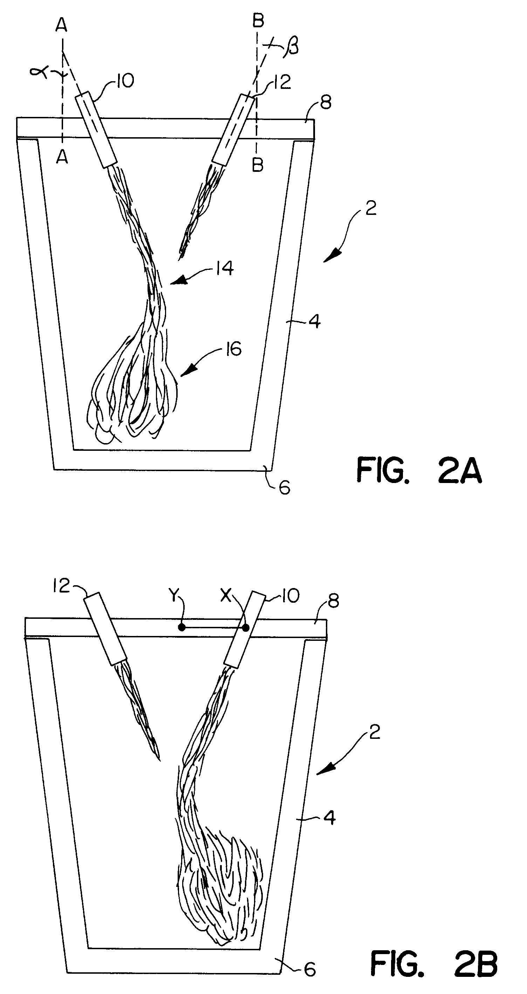

An embodiment of the present invention is shown in Figures 2A and 2B wherein a two-burner unit is used to preheat a steel ladle using natural gas as the fuel. The oxidant comprises substantially pure oxygen and a minor amount of air which naturally leaks into the system. The heating unit is designed to minimise the fuel requirements, minimise the heating cycle time, and uniformly preheat the refractory lining to a temperature of at least 2,200°F.

The ladle 2 has refractory-lined walls 4 defining a vessel for the transfer of steel. The ladle 2 has a smaller lower section 6 and a larger upper section 8. It is generally difficult to provide uniform heat to the lower section 6 because of the depth and non-uniform shape of the ladle 2.

The ladle 2 is provided with first and second burners 10, 12. For the sake of illustration, the burner 10 is designated to emit a fuel-rich mixture while the burner 12 emits an oxidant-rich mixture. These mixtures have respective R values ($R_L$ and $R_H$) less than and greater than the $R_G$ value for the overall process.

The burners 10, 12 are positioned at respective angles $\alpha$, $\beta$ from lines A-A and B-B which are parallel to the longitudinal axis of the ladle 2 as shown in Figure 2A. The angles $\alpha$ and $\beta$ are preferably at least about 10° and are chosen to allow the flames coming from the burners to contact each other at a selected location 14 downstream of the burners 10, 12 and remote from the secondary combustion zone 16 as discussed hereinafter. As shown in Figures 2A and 2B, the flames travel generally along the longitudinal axes of the respective burners 10, 12.

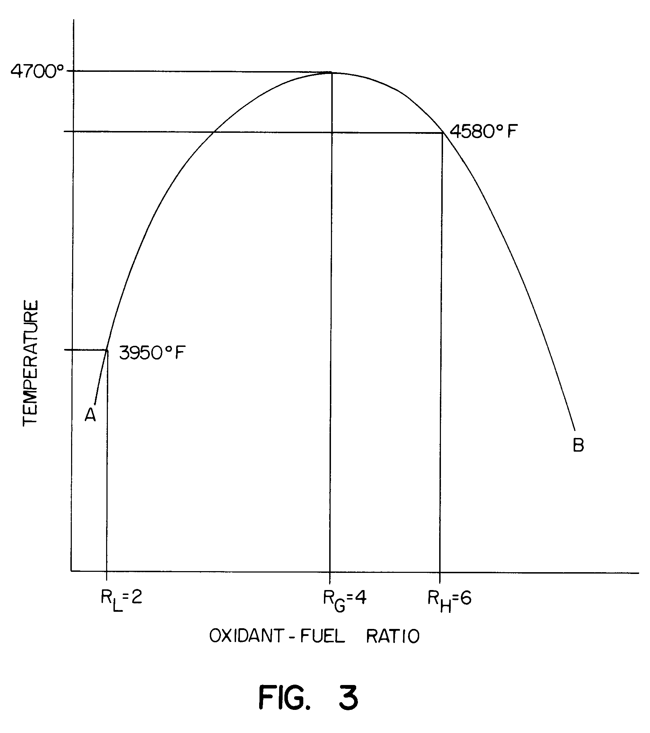

In the following example, the method of heating of a steel ladle as shown in Figures 2A and 2B is described. The selection of appropriate oxidant-fuel ratios is described with reference to Figure 3. The burner 10 emits a mixture having an R value ($R_L$) less than the $R_G$ value. Assuming methane is used as the fuel and substantially pure oxygen as the oxidant, and that fuel reduction is an important objective, the $R_G$ value selected is that which is approximately sufficient to react with all fuel coming into the system. $R_G$ therefore has a weight ratio of 4 kgs total oxygen per kg of methane.

The estimated fuel requirement to achieve the desired objectives is about 6 million BTUs/hour. In accordance with the equation

$$E_G = f(R_G)\, F_G \qquad 3$$

the flow rate of methane is calculated to be 279 lbs/hour while the total oxygen flow is 1,116 lbs/hour. The amount of air which leaks into the system is estimated to contain 186 lbs/hour of oxygen which for purposes of the following example is equally assigned to each of the burners. Therefore the amount of oxygen which must be added to the system is 930 lbs/hour.

The burner system may be operated so that the respective burners alternately fire at $R_L$ and $R_H$ oxidant-fuel ratios. One way this may be accomplished is by keeping the flow of fuel to each burner constant while alternating the flow of oxidant to each burner from a low rate ($R_L$) to a high rate ($R_H$).

Knowing that the $R_G$ is 4, suitable $R_L$ and $R_H$ values would be 2 and 6, respectively thereby meeting the condition $R_L < R_G < R_H$ as indicated in Figure 3.

This is calculated in accordance with the following:

$$F_G = 279 \text{ lbs/hr} = F_L + F_H$$
$$O_G = R_G F_G = 4 \times 279 \text{ lbs/hr} = 1116 \text{ lbs/hr.}$$
$$R_L F_L + R_H F_H = 1116 \text{ lbs/hr.}$$
$$2F_L + R_H F_H = 1116 \text{ lbs/hr.}$$

In accordance with the desired heating characteristics for the particular application,

$$F_L = F_H$$

therefore

$$279 \text{ lbs/hr.} = 2F_L$$
$$F_L = 139.5 \text{ lbs/hr.}$$

Since

$$1116 \text{ lbs/hr.} = R_L F_L + R_H F_H$$

and

$$1116 \text{ lbs/hr.} = 2\,(139.5) + R_H\,(139.5)$$
$$R_H = 6$$

thus

$$R_L = 2 < R_G = 4 < R_H = 6$$

Thus in accordance with the process conditions mentioned above, the system requires:

$$F_L = F_H = 139.5 \text{ lbs/hr. of } CH_4$$
$$R_L = 2 = 279 \text{ lbs/hr. (total oxygen)}$$
$$R_H = 6 = 837 \text{ lbs/hr. (total oxygen)}$$

Referring again to Figure 2A, the flame generated by the burner 10 has a low oxidant-fuel ratio $R_L$. The burner 12 on the other hand produces a flame having a high R value ($R_H$). The momentum of the flame from burner 12 exceeds that from the burner 10. This can be proven by comparing the respective flame velocities and masses. Accordingly, when the flames come into contact in the primary combustion zone 14 the flame from the burner 12 forces the flame from the burner 10 to bend out of alignment with the longitudinal axis of the burner 10. As can be observed in Figure 2A, the bottom left portion of the ladle 2 receives the bulk of the secondary combustion.

The flame from burner 10 burns off substantially all of the oxidant. The excess fuel acts as a heat sink to keep the temperature of the flame in the initial combustion zone to below the temperature $T_G$ expected from an $R_G$ oxidant-fuel ratio. The flame from the burner 12 burns off substantially all of the fuel present in the initial combustion zone leaving excess oxidant to act as a heat sink to also keep the temperature $T_G$ of the flame below that expected for an $R_G$ oxidant-fuel ratio. The excess fuel from the flame 10 and the excess oxidant from the flame 12, both of which are carrying high amounts of heat, are spontaneously ignited in the secondary combustion zone. The resulting flame has a temperature less than that expected with a theoretical flame from an $R_G$ mixture.

When the flow of oxidant is increased to the burner 10 and decreased to the burner 12, then the R values of the respective burners change. The R value of the burner 10 increases while the R value of the burner 12 decreases. As a result, the zone of secondary combustion 16 shifts toward the bottom right portion of the ladle 2. As the flow of oxidant continues to change from one burner to the other, the zone of secondary combustion undergoes a corresponding shift because of the changing R values thereby providing uniform heating throughout the lower section 6 of the ladle 2.

Referring to Figure 3, there is shown a graph of the two burner systems described in connection with Example 1. The $R_G$ has a value of 4 and has a theoretical flame temperature of 4700°F. One of the burners has an oxidant-fuel ratio of 2 while the other has a ratio of 6, thereby satisfying the equation $R_L < R_G < R_H$. The flame temperature of at least one of the burners (in this example both burners) is less than 4700°F ($T_G$). In operating the system in accordance with the present invention, the $R_L$ burner produces a flame temperature of 3950°F and the $R_H$ burner runs at 4580°F.

In accordance with the present invention, the secondary combustion zone can be moved to a variety of locations depending on the heating requirements of the furnace by changing the relative and/or the total momentum of the products of combustion of the first combustion zone of the appropriate burner system. One way this may be accomplished is as described above in connection with Figures 2A and Figure 2B. Another method of varying the location of the secondary combustion zone is to employ multiple burners which are alternately fired. An example of this embodiment can also be explained with reference to Figures 2A and 2B.

As shown in Figure 2A, the burner 10 may be fired from the top left portion of the ladle and the burner 12 from the top right portion. This produces secondary combustion in the bottom left portion of the ladle 2 as previously explained. If the firing of these burners is terminated and a subsequent firing made by the burner arrangement shown in Figure 2B, the secondary combustion zone 16 will shift from the bottom left to the bottom right portion of the ladle. As a consequence, the location and amount of heat in the secondary combustion zone can be controlled.

In addition to modifying the angular relationship and/or the firing sequence of the burners, there are other methods of manipulating the position of the secondary combustion zone 16. One such method is by changing the R value of the respective burners. If the R value of the flame of the burner 10 shown in Figure 2A is increased, the secondary combustion zone 16 will shift from the bottom left toward the bottom right of the ladle. Similar results can be obtained by reducing the R value of the burner 12. Conversely, a decrease in the R value of the burner 10 or an increase in the R value of the burner 12 will result in a shift toward the bottom left portion of the ladle.

A further method of changing the location of the secondary combustion zone 16 involves continuously moving at least one of the burners between set locations. For example, referring to Figure 2B, the burner 12 can be moved intermittently or continuously from location X to location Y or rotated in the same direction about the fixed point X. This results in a continuous change in the area of contact of the flames from the respective burners 10, 12. As a consequence, as the flame from the burner 12 comes closer to the flame of the burner 10, the location of the secondary combustion zone 16 will shift toward the bottom left portion of the ladle.

The method of the present invention can advantageously be applied to heating a furnace, such as a well furnace, to accommodate particular heat requirements which may be difficult to meet using conventional burner technology.

A well furnace is typically used to melt reactive metals such as aluminium. The ability to produce localised protective atmospheres to minimise oxidation losses and accomplish this in a fuel efficient manner are important considerations for such a furnace.

A certain amount of the metal will oxidise because of the existence of air leaks and possible poor fuel-air mixing and reaction with products of combustion. Therefore, the well furnace produces an exothermic reaction contributing energy to the process because the metal acts as a fuel.

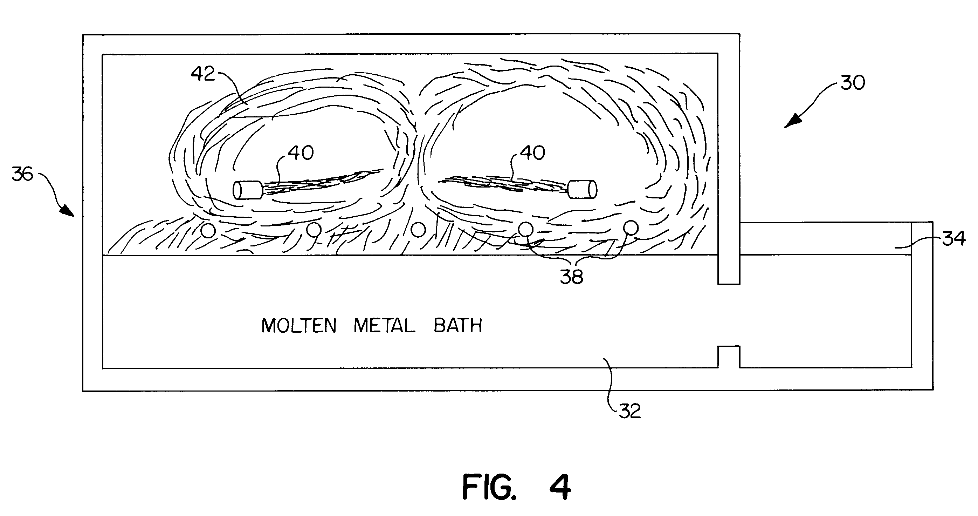

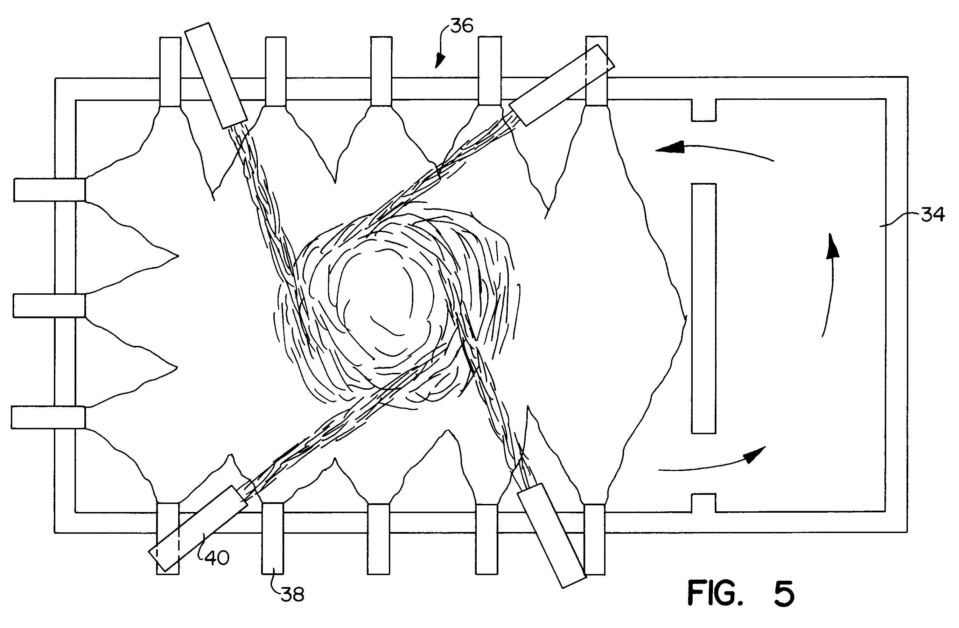

Referring to Figures 4 and 5, there is shown a well furnace 30 having a well 32 containing a molten metal bath (e.g. aluminium). The well includes an input section 34 for adding a charge of solid aluminium and a furnace section 36 for adding thermal energy to molten aluminium. The thermal energy is transmitted to the solid aluminium through circulation of the molten bath.

Placed around the furnace section 36 are a series of parallel, spaced-apart burners 38 each adapted to emit an fuel-oxidant mixture such as a light fuel oil and oxygen such that $R_L < R_G$. The low R value reducing flame blankets the molten aluminium with an oxygen-poor layer to minimise oxidation of the aluminium to aluminium oxide.

A secondary combustion zone for the supply of additional heat to the furnace is provided above the $R_L$ layer. This may be accomplished by positioning a plurality of $R_L$ burners 40 at angles so that their respective flames cause a vortex 42, thereby lifting a portion of the $R_L$ mixture into intimate contact with the $R_H$ mixture from the burners 38.

As specifically shown in Figures 4 and 5, the burners 40 are positioned at an angle of preferably about 30-40° from the axis of the burners 38 to create the vortex 42 in the centre of the furnace section 36. The vortex 42 can be relocated by changing the angle of the burners 40, by changing the R value of the flame mixture of one or more of the burners 38, 40, by alternating the R values of the mixtures or by repositioning the burners.

EXAMPLE 2

The well furnace shown and described in connection with Figures 4 and 5 is used to melt aluminium. A light fuel oil having a chemical formula of $C_{10}H_{17}$ is used as the fuel. The fuel has a net heating value of 18,000 BTUs per pound. The ideal R (oxidant-fuel ratio) is determined to be 3.33 lbs of oxygen per pound of fuel. The energy output or firing rate of the system is estimated to be ten million BTUs/hour (555.6 lbs/hour) for purposes of this example. It was also assumed for purposes of this example that the furnace refractory has a maximum temperature limitation of 4500°F and that air leakage or oxidation is insignificant.

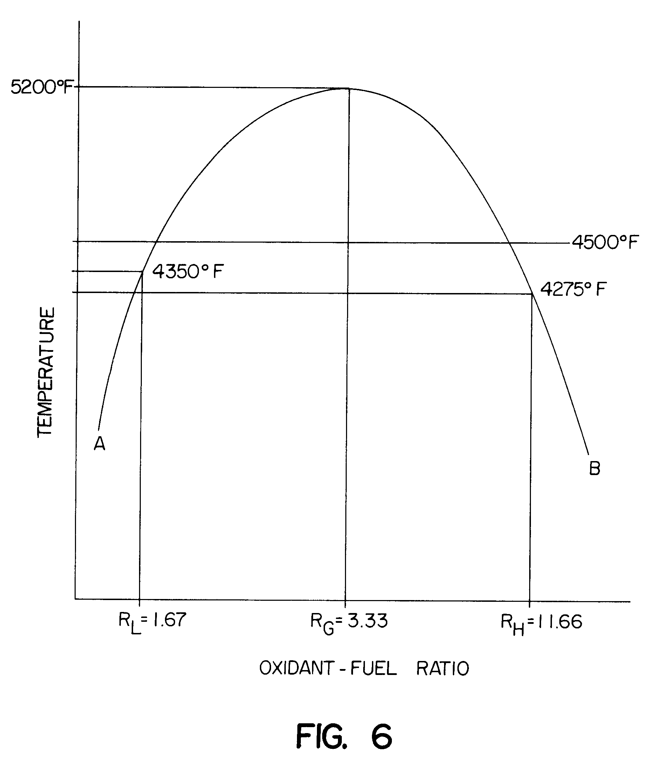

The plot of flame temperature and R values for this system is shown in Figure 6. The lowest and highest R values, 1.67 and 11.66 respectively, are calculated in the manner described previously and chosen to meet the maximum refractory temperature limitation of 4500/F.

Assuming that all of the energy comes from the combustion of the fuel oil at ten million BTU/hour the fuel and oxygen requirements of the system are determined as follows

$F_L + F_H$ = 555.6 lbs/hr.
$R_G F_G$ = 1.67 $F_L$ + 11.66 $F_H$ = 1850 lbs/hr.
$F_L$ = 463.3 lbs/hr., $F_H$ = 92.3 lbs/hr.
$O_L$ = 773.7 lbs/hr, $O_H$ = 1076.3 lbs/hr.

Having determined the fuel and oxygen flow from the low and high R value burners to the system, it must be determined how the total flow of the fuel and oxidant is distributed among the 17 burners employed in the well furnace. The fuel/oxidant distribution among the 13 low R value and 4 high R value burners as shown specifically in Figures 4 and 5 can be resolved in a number of ways.

The first method is to divide the appropriate flows $F_L$ and $O_L$ and $F_H$ and $O_H$ by the total number of burners for the low and high R values, respectively. This procedure automatically maintains the proper R value for each burner.

The second method is to vary the oxidant and fuel flows for each set of low and high R value burners. The fuel and oxidant flows are set in a manner which maintains the proper R ratio and releases the optimum amount of energy while still keeping within the end point limits of the system (e.g. the maximum refractory temperature). The total oxidant and fuel flows for a particular set of burners must equal the appropriate total flow required for the system as calculated from the flow equations for the oxidant and fuel.

The third method may be utilised to obtain optimum localised heating as described in connection with the steel ladle of Example 1 and Figures 2A and 2B. The oxidant and fuel flows are varied for each burner or group of burners to create localised secondary areas of combustion.

## Claims

1. A method of burning a fuel comprising: burning fuel in at least one first fuel-oxidant mixture from a first burner having an oxidant-fuel ratio ($R_L$) and in at least one second fuel-oxidant mixture from a second burner having an oxidant-fuel ratio ($R_H$) such that

   $$R_L < R_G < R_H$$

   wherein $R_G$ is the overall oxidant-fuel ratio used in the combustion.

2. A method according to claim 1, wherein at least one of the first and second fuel-oxidant mixtures has a flame temperature which is less than the flame temperature ($T_G$) produced from an oxidant-fuel ratio ($R_G$).

3. A method according to claim 2, wherein at least one of the first fuel-oxidant mixtures and at least one of the second fuel-oxidant mixtures produces a flame temperature less than the flame temperature $T_G$.

4. A method according to any one of the preceding claims, further comprising burning the first and second fuel-oxidant mixtures in at least one first combustion zone under conditions which result in excess fuel from one of said mixtures and excess oxidant from the other of said mixtures; directing said excess fuel and oxidant to a second combustion zone remote from the first combustion zone; and burning said excess fuel and oxidant in said second combustion zone.

5. A method according to any one of the preceding claims, wherein the overall oxidant-fuel ratio is substantially equal to a stoichiometric mixture for the fuel and oxidant.

6. A method according to any one of the preceding claims, wherein the fuels are selected from the group consisting of straight and branched chain hydrocarbons having up to 20 carbon atoms.

7. A method according to any one of the preceding claims, wherein the oxidant is oxygen-enriched air or substantially pure oxygen.

8. A method according to any one of the preceding claims, further comprising altering the flow of oxidant to said first and second burners thereby to change the oxidant-fuel ratios of each burner.

9. A method according to claim 8, further comprising directing at least one burner for burning the first fuel-oxidant mixture to blanket the surface of a molten metal bath, and directing at least one burner for burning the second fuel-oxidant mixture above the first fuel-oxidant mixture in a manner which creates a secondary combustion zone above the first fuel-oxidant mixture.

FIG. I

FIG. 2A

FIG. 2B

FIG. 3

MOLTEN METAL BATH

FIG. 4

FIG. 5

EP 0 562 816 A2

FIG. 6